# FASCICULE DE BREVET EUROPEEN

(11) **EP 3 655 261 B1**
(45) Date de publication et mention de la délivrance du brevet: **01.09.2021**
(21) Numéro de dépôt: 18773521.2
(22) Date de dépôt: 16.07.2018
(51) Int. Cl.: B60C 1/00, B60C 11/00

(54) **PNEUMATIQUE PRESENTANT DES PROPRIETES D'USURE ET DE RESISTANCE AU ROULEMENT AMELIOREES**
REIFEN MIT VERBESSERTEN ABNUTZUNGS- UND ROLLWIDERSTANDSEIGENSCHAFTEN
TYRE HAVING IMPROVED WEAR AND ROLLING RESISTANCE PROPERTIES

(30) Priorité: 21.07.2017 FR 1756980
(43) Date de publication de la demande: 27.05.2020
(73) Titulaire: Compagnie Générale des Etablissements Michelin, 63000 Clermont-Ferrand (FR)
(72) Inventeur: THOMASSON, Damien, 63040 Clermont-Ferrand Cedex 9 (FR); GAYTON, Christophe, 63040 Clermont-Ferrand Cedex 9 (FR)
(74) Mandataire: Le Cam, Stéphane Georges Elie
(86) Numéro de dépôt international: PCT/FR2018/051800
(87) Numéro de publication internationale: WO 2019/016460

(56) Documents cités:
- WO-A1-2014/005927
- FR-A1- 2 983 122
- FR-A1- 2 999 116

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 2.5°.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuelle de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques ainsi réalisés sont tout à fait satisfaisants pour les applications routières précitées. Pour assurer la possibilité d'effectuer un rechapage, il est toutefois recommandé d'éviter une dégradation trop importante du matériau interne, celui-ci présentant une usure relativement rapide comparée à celle du matériau externe, pour ne pas risquer un endommagement de l'armature du pneumatique.

En conséquence, l'utilisation de la bande de roulement de tels pneumatiques ne peut pas être totalement optimisée au risque de compromettre les possibilités de rechapage du pneumatique.

D'autres documents ont encore proposé des bandes de roulement constituées de différents matériaux dont les propriétés de chacun permettent de parvenir à différents compromis de performances des pneumatiques ainsi réalisés. Il s'agit par exemple des documents FR 2 983 122 A1, FR 2 999 116 A1 et WO 2014/005927 A1.

Les inventeurs se sont ainsi donnés pour mission d'être en mesure de fournir des pneumatiques autorisant une distance de roulage toujours plus importante avant d'envisager un rechapage, les propriétés d'usure étant conservées ou améliorées quel que soit l'usage tout en procurant des propriétés de résistance au roulement améliorées.

Ce but est atteint selon l'invention par un pneumatique à armature de carcasse radiale comprenant une armature de sommet, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant au moins une couche de mélange polymérique formant une surface de roulement destinée à venir en contact avec une chaussée, le rapport de la valeur maximale de tan(δ), noté tan(δ)max, mesurée à 60 °C sur le cycle aller, de ladite couche de mélange polymérique formant la surface de roulement sur le module complexe de cisaillement dynamique G*, mesuré à 25% et 60 °C sur le cycle aller de ladite couche de mélange polymérique formant la surface de roulement étant inférieur à 0.065 et la valeur de déformation à rupture en élongation de ladite couche de mélange polymérique formant la surface de roulement étant supérieure ou égale à 550 %.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 60°C. On effectue un balayage en amplitude de déformation de 0,1 à 100% (cycle aller), puis de 100% à 1% (cycle retour). Les résultats exploités sont le module complexe de cisaillement dynamique (G*) et le facteur de perte tan(δ) mesuré sur le cycle aller. Pour le cycle aller, on indique la valeur maximale de tan(δ) observée, noté tan(δ)ₘₐₓ.

La valeur de déformation à rupture en élongation est déterminée sur une mesure de traction. Les essais de traction permettent de déterminer les contraintes d'élasticité et les propriétés à la rupture. Ils sont effectués selon la norme française NF T 46-002 de septembre 1988. Toutes ces mesures de traction sont effectuées à 60°C, et dans des conditions normales d'hygrométrie (50±10% d'humidité relative). Les allongements à la rupture sont exprimés en pourcentage.

Les essais réalisés ont montré que les pneumatiques selon l'invention présentent des performances d'usure et d'endurance satisfaisantes quelles que soient les conditions d'utilisation des pneumatiques.

Les inventeurs ont en effet su mettre en évidence qu'en comparaison avec des mélanges plus usuels pour obtenir une bande de roulement présentant de faibles pertes hystérétiques, la vitesse d'usure de la couche de la bande de roulement, formant la surface de roulement, selon l'invention est considérablement améliorée. Le rapport de la valeur maximale de tan(δ), noté tan(δ)max, mesurée à 60 °C sur le cycle aller sur le module complexe de cisaillement dynamique G*, mesuré à 25% et 60 °C sur le cycle aller inférieur à 0.065 associé à une valeur de déformation à rupture en élongation supérieure ou égale à 550 % confère en association avec des performances en résistance au roulement élevées et des performances d'endurance satisfaisantes du pneumatique, des performances en terme d'usure également satisfaisantes. Les mélanges selon l'invention sont notamment favorables pour résister aux agressions que subit un pneumatique en roulage et conduisent donc à des performances d'endurance supérieures qu'avec des mélanges plus usuels.

Par contre, des mélanges présentant de telles propriétés de rigidité et de pertes hystérétiques sont connus pour conduire lors de l'usage des pneumatiques à une altération des performances du pneumatique en termes d'usure et notamment de régularité d'usure.

Les inventeurs pensent interpréter les résultats obtenus avec les pneumatiques selon l'invention par la présence de la couche d'éléments de renforcement circonférentiels qui semble pouvoir diminuer voire éviter ces irrégularités d'usure qui apparaissent notamment entre le centre de la bande de roulement et les bords du pneumatique.

De manière très surprenante, la couche d'éléments de renforcement circonférentiels, qui est usuellement présente pour limiter des effets de cisaillement entre les couches de sommet de travail, semble permettre de compenser les effets liés aux propriétés de rigidité et de pertes hystérétiques du mélange constituant la bande de roulement sur la régularité d'usure de ladite bande de roulement lors des roulages.

Avantageusement selon l'invention, la valeur maximale de tan(δ), noté tan(δ)max, mesurée à 60 °C sur le cycle aller, de ladite couche de mélange polymérique formant la surface de roulement est inférieure ou égale à 0.10.

Ces valeurs de tan(δ)max de la couche de mélange polymérique limitent les montées en température des mélanges et favorisent ainsi l'endurance du pneumatique. Ces valeurs favorisent encore les propriétés de résistance au roulement du pneumatique.

Avantageusement encore selon l'invention, le module complexe de cisaillement dynamique G*, mesuré à 25% et 60 °C sur le cycle aller de ladite couche de mélange polymérique formant la surface de roulement est supérieure ou égal à 1.7. De telles valeurs caractérisent la rigidité des mélanges et ainsi les propriétés d'usure de la bande roulement.

Selon un mode de réalisation préféré de l'invention, ladite couche de mélange polymérique formant la surface de roulement est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement de silice avec un taux exprimé en pce (parties en poids pour cent parties d'élastomères) supérieur à 40 et un taux de charge global exprimé en pce supérieur à 50.

Avantageusement encore selon ce dernier mode de réalisation préféré de l'invention, la somme des taux de soufre et taux d'accélérateur de ladite couche de mélange polymérique formant la surface de roulement est supérieure ou égale à 2,5 parties en poids pour 100 parties en poids d'élastomère (pce).

Avantageusement encore selon l'invention, le taux de soufre total de ladite couche de mélange polymérique formant la surface de roulement, exprimé en pce, est supérieur à 1.9.

La mesure du taux de soufre total dans la composition est effectuée par analyse élémentaire, à l'aide du micro-analyseur Thermo Scientific Flash 2000. L'analyse comprend une étape de combustion de l'échantillon puis une étape de séparation des composés formés.

Environ 1 mg d'échantillon est introduit dans le micro-analyseur, où il subit une combustion flash de 1000°C sous oxygène. Les gaz formés sont alors oxydés grâce à l'oxygène en excès et à un catalyseur d'anhydride tungstique. Une étape de réduction par passage sur du cuivre permet ensuite de piéger l'oxygène en excès, et de réduire les oxydes d'azote en N2 ainsi que les sulfites en dioxyde de soufre SO2. L'eau est piégée et les composés N2, CO2, SO2 formés sont ensuite séparés sur une colonne chromatographique puis détectés par un catharomètre. La quantification du soufre total est réalisée par mesure de l'aire du pic de SO2, après calibration avec des standards.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon un mode de réalisation préférée de l'invention, l'armature sommet étant constituée d'au moins deux couches d'éléments de renforcement, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préféré de l'invention, la couche de sommet de travail axialement la plus large est radialement à l'intérieur des autres couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

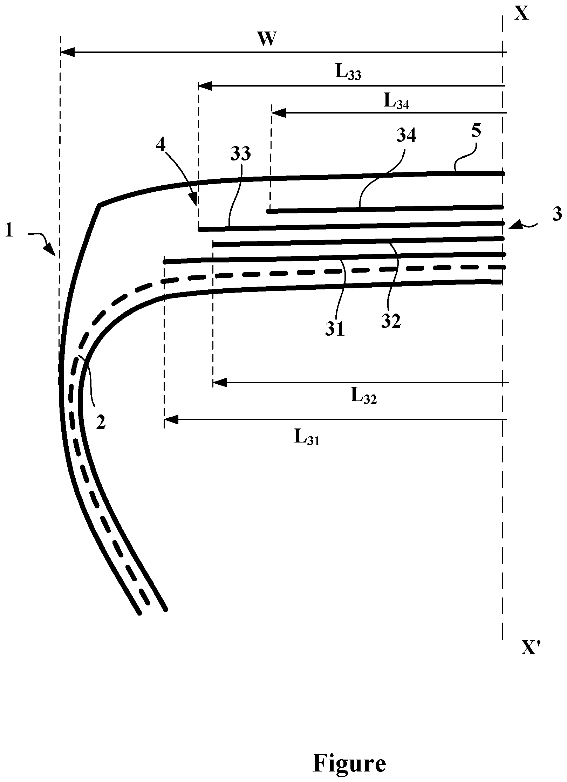

D'autres détails et caractéristiques avantageux de l'invention ressortiront ci-après de la description des exemples de réalisation de l'invention en référence à la figure qui représente une vue méridienne d'un schéma d'un pneumatique selon l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/70 R 22.5. Ledit pneumatique 1 comprend une armature de carcasse radiale 2 ancrée dans deux bourrelets, non représentés sur la figure. L'armature de carcasse est frettée par une armature de sommet 3, formée radialement de l'intérieur à l'extérieur :
- d'une première couche de travail 31 formée de câbles métalliques inextensibles 9.28 non frettés, continus sur toute la largeur de la nappe, orientés d'un angle égal à 24°,
- d'une couche d'éléments de renforcement circonférentiels 32 formée de câbles métalliques en acier 21x23, de type "bi-module",
- d'une seconde couche de travail 33 formée de câbles métalliques inextensibles 9.28 non frettés, continus sur toute la largeur de la nappe, orientés d'un angle égal à 24° et croisés avec les câbles métalliques de la couche 31,
- d'une couche de protection 34 formées de câbles métalliques élastiques 6.35.

L'armature de sommet est elle-même coiffée d'une bande de roulement 4 présentant une surface 5 destinée à venir au contact du sol.

La largeur axiale maximale W du pneumatique est égale à 317 mm.

La largeur axiale L₃₁ de la première couche de travail 31 est égale à 252 mm.

La largeur axiale L₃₃ de la deuxième couche de travail 33 est égale à 232 mm.

Quant à la largeur axiale L₃₂ de la couche d'éléments de renforcement circonférentiels 32, elle est égale à 194 mm.

La dernière nappe de sommet 34, dite de protection, a une largeur L44 égale à 124 mm.

Des essais sont réalisés avec des pneumatiques selon l'invention.

Les mêmes essais sont réalisés avec des pneumatiques de référence.

Les différents mélanges utilisés pour les bandes de roulement sont listés ci-après :

| | Mélange R1 | Mélange 1 | Mélange 2 |
|---|---|---|---|
| NR | 80 | 80 | 80 |
| BR | 20 | 20 | 20 |
| Noir N234 | 48 | 3 | 3 |
| Silice 165G | 0 | 50 | 54 |
| Antioxydant (6PPD) | 2.5 | 2.5 | 2.5 |
| Acide stéarique | 2 | 2 | 2 |
| Oxyde de zinc | 3 | 1 | 1 |
| Silane liquide Si69 | 0 | 5 | 5.4 |
| soufre | 1.5 | 1.5 | 1.75 |
| Accélérateur CBS | 0.9 | 1.8 | 2.05 |
| Co-accélérateur DPG | 0 | 0.5 | 0.54 |
| CBS+S | 2.4 | 3.3 | 3.8 |

Les valeurs des constituants sont exprimées en pce (parties en poids pour cent parties d'élastomères).

Les propriétés mesurées sont exprimées dans le tableau suivant pour chacun des mélanges :

| | Mélange R1 | Mélange 1 | Mélange 2 |
|---|---|---|---|
| S total | 1.9 | 2 | 2.4 |
| G* 25% aller | 1.8 | 2 | 2.2 |
| tan(δ)ₘₐₓ aller | 0.15 | 0.09 | 0.1 |
| tan(δ)ₘₐₓ / G* | 0.083 | 0.045 | 0.045 |
| déformation à rupture en élongation (%) | 600 | 600 | 570 |

Les valeurs des constituants sont exprimées en pce (parties en poids pour cent parties d'élastomères).

Les pneumatiques selon l'invention sont réalisés conformément à la figure. Leur bande de roulement est constituée par l'un des mélanges 1 ou 2 conformément à l'invention.

Des premiers pneumatiques de référence T1 sont semblables aux pneumatiques de l'invention et leur architecture sommet diffère en ce que l'armature sommet ne comporte pas de couche d'éléments de renforcement circonférentiels. Ils sont par ailleurs réalisés avec une bande de roulement constituée du mélange R1.

D'autres pneumatiques de référence T2 ont été réalisés. Ils sont semblables aux pneumatiques de l'invention et leur architecture sommet diffère en ce que l'armature sommet ne comporte pas de couche d'éléments de renforcement circonférentiels. Ils sont réalisés avec une bande de roulement constituée par le mélange 1.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont au moins aussi importantes voire plus importantes pour les pneumatiques selon l'invention que les pneumatiques de référence T1 et T2. Il apparaît donc que les pneumatiques selon l'invention présentent des performances en termes d'endurance au moins aussi bonnes que celles des pneumatiques de référence.

D'autres essais avec les pneumatiques selon l'invention et les pneumatiques de référence ont consistés en des roulages simulant un usage moyen des pneumatiques lorsqu'ils équipent des véhicules de type Poids lourds. Le but de ces essais est de contrôler l'état des pneumatiques au cours des roulages et d'identifier d'éventuels problèmes d'irrégularités d'usure et d'agression de la bande de roulement.

Par ailleurs, des mesures de résistance au roulement ont été effectuées. Ces mesures ont porté sur les pneumatiques de référence T1, T2 et sur les pneumatiques selon l'invention dont la bande de roulement est constituée des mélange 1 ou 2.

Les résultats des essais sont présentés dans le tableau suivant.

Les mesures de résistance au roulement sont exprimées en Kg/t, une valeur de 100 étant attribuée au pneumatique T1. Des valeurs supérieures à 100 montrent de meilleures performances en résistance au roulement.

L'usure est exprimée en perte de hauteur, une valeur de 100 étant attribuée au pneumatique T1. Des valeurs supérieures à 100 montrent de meilleures performances en usure.

| | Pneumatique T1 | Pneumatique T2 | Pneumatique Invention 1 | Pneumatique Invention 2 |
|---|---|---|---|---|
| Résistance au roulement | 100 | 115 | 115 | 109 |
| Usure | 100 | 85 | 85 | 100 |
| Usure irrégulière | bon | Non acceptable | bon | bon |
| Agression | bon | bon | bon | acceptable |

Il ressort de ces essais que les pneumatiques selon l'invention permettent d'améliorer les performances en termes d'usure en améliorant la régularité d'usure et en présentant des performances en termes de résistance au roulement améliorées. Les résultats d'usure du pneumatique 1 selon l'invention restent tout à fait satisfaisants.

Au cours des roulages, les pneumatiques de référence T2 ont fait apparaître des irrégularités d'usure. De telles irrégularités d'usure peuvent dans certaines conditions avoir des effets négatifs sur les propriétés d'adhérence du pneumatique car la surface de l'aire de contact peut s'en trouver modifiée. Ces irrégularités d'usure peuvent également générer des vibrations, perceptibles par l'usager et donc une situation d'inconfort pour celui-ci.

Concernant les pneumatiques selon l'invention, les essais montrent que de telles irrégularités d'usure apparaissent plus tardivement et de manière beaucoup moins prononcée de sorte que les propriétés d'adhérence ne sont quasiment pas affectée quelles que soient les conditions de roulage.

## Revendications

1. Pneumatique à armature de carcasse radiale comprenant une armature de sommet, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant au moins une couche de mélange polymérique formant une surface de roulement destinée à venir en contact avec une chaussée, la valeur de déformation à rupture en élongation de ladite couche de mélange polymérique formant la surface de roulement étant supérieure ou égale à 550 %, **caractérisé en ce que** le rapport de la valeur maximale de tan(δ), noté tan(δ)max, mesurée à 60 °C sur le cycle aller, de ladite couche de mélange polymérique formant la surface de roulement sur le module complexe de cisaillement dynamique G*, mesuré à 25% et 60 °C sur le cycle aller de ladite couche de mélange polymérique formant la surface de roulement est inférieur à 0.065.

2. Pneumatique selon la revendication 1, **caractérisé en ce que** la valeur maximale de tan(δ), noté tan(δ)max, mesurée à 60 °C sur le cycle aller, de ladite couche de mélange polymérique formant la surface de roulement est inférieure ou égale à 0.10.

3. Pneumatique selon l'une des revendications précédentes, **caractérisé en ce que** le module complexe de cisaillement dynamique G*, mesuré à 25% et 60 °C sur le cycle aller de ladite couche de mélange polymérique formant la surface de roulement est supérieure ou égal à 1.7.

4. Pneumatique selon l'une des revendications précédentes, **caractérisé en ce que** ladite couche de mélange polymérique formant la surface de roulement est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement de silice avec un taux exprimé en pce (parties en poids pour cent parties d'élastomères) supérieur à 40 et un taux de charge global exprimé en pce supérieur à 50.

5. Pneumatique selon la revendication 4, **caractérisé en ce que,** la somme des taux de soufre et taux d'accélérateur de ladite couche de mélange polymérique formant la surface de roulement est supérieure ou égale à 2,5 parties en poids pour 100 parties en poids d'élastomère (pce).

6. Pneumatique selon l'une des revendications précédentes, **caractérisé en ce que** le taux de soufre total de ladite couche de mélange polymérique formant la surface de roulement, exprimé en pce, est supérieur ou égal à 1.9.

7. Pneumatique selon l'une des revendications précédentes, l'armature sommet étant constituée d'au moins deux couches d'éléments de renforcement, **caractérisé en ce que** ladite au moins une couche d'éléments de renforcement circonférentiels est radialement disposée entre deux couches de sommet de travail.

8. Pneumatique selon la revendication 7, **caractérisé en ce que** les largeurs axiales des couches de sommet de travail radialement adjacentes à la couche d'éléments de renforcement circonférentiels sont supérieures à la largeur axiale de ladite couche d'éléments de renforcement circonférentiels.

9. Pneumatique selon la revendication 8, **caractérisé en ce que** les couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

10. Pneumatique selon l'une des revendications précédentes, **caractérisé en ce que** l'armature de sommet est formée d'au moins deux couches de sommet de travail d'éléments de renforcement, de préférence inextensibles, croisés d'une couche à l'autre en faisant avec la direction circonférentielle des angles compris entre 10° et 45°.

11. Pneumatique selon l'une des revendications précédentes, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

12. Pneumatique selon l'une des revendications précédentes, **caractérisé en ce que** l'armature de sommet est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

13. Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 45°.

## Patentansprüche

1. Reifen mit radialer Karkassenbewehrung, welcher eine Scheitelbewehrung umfasst, die ihrerseits radial von einem Laufstreifen bedeckt wird, wobei der Laufstreifen über zwei Seitenwände mit zwei Wülsten verbunden ist, wobei die Scheitelbewehrung wenigstens eine Schicht aus umlaufenden Verstärkungselementen aufweist, wobei der Laufstreifen wenigstens eine Schicht aus Polymermischung aufweist, die eine Lauffläche bildet, die dazu bestimmt ist, mit einer Fahrbahn in Kontakt zu kommen, wobei der Verformungswert bei Dehnungsbruch der die Lauffläche bildenden Schicht aus Polymermischung größer oder gleich 550 % ist, **dadurch gekennzeichnet, dass** das Verhältnis des bei 60 °C im Hinzyklus gemessenen maximalen Wertes von tan(δ), mit tan(δ)max bezeichnet, der die Lauffläche bildenden Schicht aus Polymermischung zum bei 25 % und 60 °C im Hinzyklus gemessenen komplexen dynamischen Schubmodul G* der die Lauffläche bildenden Schicht aus Polymermischung kleiner als 0,065 ist.

2. Reifen nach Anspruch 1, **dadurch gekennzeichnet, dass** der bei 60 °C im Hinzyklus gemessene maximale Wert von tan(δ), mit tan(δ)max bezeichnet, der die Lauffläche bildenden Schicht aus Polymermischung kleiner oder gleich 0,10 ist.

3. Reifen nach einem der vorhergehenden Ansprüche, **dadurch gekennzeichnet, dass** der bei 25 % und 60 °C im Hinzyklus gemessene komplexe dynamische Schubmodul G* der die Lauffläche bildenden Schicht aus Polymermischung größer oder gleich 1,7 ist.

4. Reifen nach einem der vorhergehenden Ansprüche, **dadurch gekennzeichnet, dass** die die Lauffläche bildende Schicht aus Polymermischung eine Elastomermischung auf der Basis von Naturkautschuk oder von synthetischem Polyisopren mit einem Mehrheitsanteil von cis-1,4-Ketten und eventuell von wenigstens einem weiteren Dienelastomer ist, wobei der Naturkautschuk oder das synthetische Polyisopren im Fall eines Verschnitts in einem Mehrheitsanteil bezüglich des Anteils des anderen oder der anderen verwendeten Dienelastomere vorliegt, und von einem verstärkenden Füllstoff, der überwiegend aus Siliciumdioxid mit einem in pce (Gewichtsteile pro hundert Teile Elastomer) ausgedrückten Anteil von mehr als 40 besteht, und einem in pce ausgedrückten Gesamtanteil von Füllstoff von mehr als 50.

5. Reifen nach Anspruch 4, **dadurch gekennzeichnet, dass** die Summe des Anteils an Schwefel und des Anteils an Beschleuniger in der die Lauffläche bildenden Schicht aus Polymermischung größer oder gleich 2,5 Gewichtsteile pro 100 Gewichtsteile Elastomer (pce) ist.

6. Reifen nach einem der vorhergehenden Ansprüche, **dadurch gekennzeichnet, dass** der Gesamtanteil an Schwefel in der die Lauffläche bildenden Schicht aus Polymermischung, ausgedrückt in pce, größer oder gleich 1,9 ist.

7. Reifen nach einem der vorhergehenden Ansprüche, wobei die Scheitelbewehrung aus wenigstens zwei Schichten von Verstärkungselementen besteht, **dadurch gekennzeichnet, dass** die wenigstens eine Schicht aus umlaufenden Verstärkungselementen radial zwischen zwei Arbeitsscheitelschichten angeordnet ist.

8. Reifen nach Anspruch 7, **dadurch gekennzeichnet, dass** die axialen Breiten der Arbeitsscheitelschichten, die der Schicht aus umlaufenden Verstärkungselementen radial benachbart sind, größer als die axiale Breite der Schicht aus umlaufenden Verstärkungselementen sind.

9. Reifen nach Anspruch 8, **dadurch gekennzeichnet, dass** die Arbeitsscheitelschichten, die der Schicht aus umlaufenden Verstärkungselementen benachbart sind, beiderseits der Äquatorialebene und in der unmittelbaren axialen Verlängerung der Schicht aus umlaufenden Verstärkungselementen auf einer axialen Breite gekoppelt sind, um anschließend durch Profile von Kautschukmischung wenigstens auf dem restlichen Teil der den zwei Arbeitsschichten gemeinsamen Breite entkoppelt zu werden.

10. Reifen nach einem der vorhergehenden Ansprüche, **dadurch gekennzeichnet, dass** die Scheitelbewehrung von wenigstens zwei Arbeitsscheitelschichten aus vorzugsweise nicht dehnbaren Verstärkungselementen gebildet wird, die sich von einer Schicht zur anderen überkreuzen und dabei mit der Umfangsrichtung Winkel zwischen 10° und 45° bilden.

11. Reifen nach einem der vorhergehenden Ansprüche, **dadurch gekennzeichnet, dass** die Verstärkungselemente wenigstens einer Schicht aus umlaufenden Verstärkungselementen metallische Verstärkungselemente sind, die einen Sekantenmodul bei 0,7 % Dehnung zwischen 10 und 120 GPa und einen maximalen Tangentenmodul, der kleiner als 150 GPa ist, aufweisen.

12. Reifen nach einem der vorhergehenden Ansprüche, **dadurch gekennzeichnet, dass** die Scheitelbewehrung radial außen durch wenigstens eine zusätzliche Lage, "Schutzlage" genannt, aus "elastisch" genannten Verstärkungselementen vervollständigt wird, die in Bezug auf die Umfangsrichtung unter einem Winkel zwischen 10° und 45° und in derselben Richtung wie der Winkel, der von den nicht dehnbaren Elementen der Arbeitslage gebildet wird, welche ihr radial benachbart ist, ausgerichtet sind.

13. Reifen nach einem der vorhergehenden Ansprüche, **dadurch gekennzeichnet, dass** die Scheitelbewehrung außerdem eine Triangulationsschicht aufweist, die von metallischen Verstärkungselementen gebildet wird, die mit der Umfangsrichtung Winkel bilden, die größer als 45° sind.

## Claims

1. Tyre having a radial carcass reinforcement comprising a crown reinforcement, itself capped radially with a tread, said tread being joined to two beads via two sidewalls, the crown reinforcement comprising at least one layer of circumferential reinforcing elements, said tread comprising at least one layer of polymer compound forming a tread surface intended to come into contact with a road surface, the value of deformation at break in elongation of said layer of polymer compound forming the tread surface being greater than or equal to 550%, **characterized in that** the ratio of the maximum value of tan(δ), denoted tan(δ)max, measured at 60°C on the forward cycle, of said layer of polymer compound forming the tread surface to the complex dynamic shear modulus G*, measured at 25% and 60°C on the forward cycle of said layer of polymer compound forming the contact surface is less than 0.065.

2. Tyre according to Claim 1, **characterized in that** the maximum value of tan(δ), denoted tan(δ)max, measured at 60°C on the forward cycle, of said layer of polymer compound forming the tread surface is less than or equal to 0.10.

3. Tyre according to either of the preceding claims, **characterized in that** the complex dynamic shear modulus G*, measured at 25% and 60°C on the forward cycle of said layer of polymer compound forming the tread surface is greater than or equal to 1.7.

4. Tyre according to one of the preceding claims, **characterized in that** said layer of polymer compound forming the tread surface is an elastomer compound based on natural rubber or synthetic polyisoprene with a majority of cis-1,4 linkages and optionally on at least one other diene elastomer, the natural rubber or the synthetic polyisoprene in case of a blend being present in a majority amount relative to the amount of the other diene elastomer(s) used and on a reinforcing filler consisting predominantly of a specific silica, with a content expressed in phr (parts by weight per hundred parts of elastomers) of greater than 40 and an overall filler content expressed in phr of greater than 50.

5. Tyre according to Claim 4, **characterized in that** the sum of the sulfur content and accelerator content of said layer of polymer compound forming the tread surface is greater than or equal to 2.5 parts by weight per 100 parts by weight of elastomer (phr).

6. Tyre according to one of the preceding claims, **characterized in that** the total sulfur content of said layer of polymer compound forming the tread surface, expressed in phr, is greater than or equal to 1.9.

7. Tyre according to one of the preceding claims, the crown reinforcement consisting of at least two layers of reinforcing elements, **characterized in that** said at least one layer of circumferential reinforcing elements is positioned radially between two working crown layers.

8. Tyre according to Claim 7, **characterized in that** the axial widths of the working crown layers radially adjacent to the layer of circumferential reinforcing elements are greater than the axial width of said layer of circumferential reinforcing elements.

9. Tyre according to Claim 8, **characterized in that** the working crown layers adjacent to the layer of circumferential reinforcing elements are coupled over an axial width, on either side of the equatorial plane and in the immediate axial extension of the layer of circumferential reinforcing elements, and are subsequently decoupled by profiled elements of rubber compound at least over the remainder of the width common to said two working layers.

10. Tyre according to one of the preceding claims, **characterized in that** the crown reinforcement is formed of at least two working crown layers of reinforcing elements, preferably inextensible, crossed from one layer to the other, forming, with the circumferential direction, angles of between 10° and 45°.

11. Tyre according to one of the preceding claims, **characterized in that** the reinforcing elements of at least one layer of circumferential reinforcing elements are metal reinforcing elements having a secant modulus at 0.7% elongation of between 10 and 120 GPa and a maximum tangent modulus of less than 150 GPa.

12. Tyre according to one of the preceding claims, **characterized in that** the crown reinforcement is supplemented radially on the outside by at least one additional ply, referred to as a protective ply, of reinforcing elements, referred to as elastic reinforcing elements, that are oriented relative to the circumferential direction at an angle of between 10° and 45° and in the same direction as the angle formed by the inextensible elements of the working ply which is radially adjacent thereto.

13. Tyre according to one of the preceding claims, **characterized in that** the crown reinforcement also comprises a triangulation layer formed of metal reinforcing elements forming angles of greater than 45° with the circumferential direction.
